# EUROPÄISCHE PATENTSCHRIFT

(11) **EP 0 582 964 B1**
(45) Veröffentlichungstag und Bekanntmachung des Hinweises auf die Patenterteilung: **06.05.1999**
(21) Anmeldenummer: 93112512.4
(22) Anmeldetag: 04.08.1993
(51) Int. Cl.: B07C 5/34

(54) **Verfahren und Vorrichtung zur Datenerfassung von auf Förderbahnen transportierten Gegenständen, insbesondere von Paketen**
Method and device for data acquisition from objects carried on conveyors, particularly from packages
Procédé et dispositif d'acquisition de données d'objets transportés sur des conveyeurs, en particulier de paquets

(30) Priorität: 12.08.1992 DE 4226711
(43) Veröffentlichungstag der Anmeldung: 16.02.1994
(73) Patentinhaber: SIEMENS AKTIENGESELLSCHAFT, 80333 München (DE)
(72) Erfinder: Engelhardt, Alfred, Dipl.-Ing. (FH), D-91241 Kirchensittenbach (DE)

(56) Entgegenhaltungen:
- DE-A- 3 124 778
- DE-A- 3 303 109
- DE-A- 3 932 374
- FR-A- 2 565 370
- US-A- 4 832 204
- PATENT ABSTRACTS OF JAPAN vol. 15, no. 451 (P-1276) 15. November 1991 & JP-A-03 189 871 (TOPPAN PRINTING CO LTD)
- DATABASE EPODOC US4276112 30. Juni 1981, 'Individual label application system' & US-A-4 276 112 (NOMAX CORP)

## Beschreibung

Die Erfindung betrifft ein Verfahren und eine Vorrichtung zur Datenerfassung von auf Förderbahnen transportierten Gegenständen, insbesondere von Paketen. - Die automatische Identifizierung auf Basis der erfaßten Daten von auf Endlosförderen transportierten Gegenständen ist eine wesentliche Voraussetzung für die Automatisierung der Lager-, Versand- und Verteiltechnik etc. Ein einmal eindeutig identifizierter und von einer Datenverarbeitungsanlage erfaßter Gegenstand ist an jeder beliebigen Stelle eines Lagersystems wiederauffindbar.

In diesem Zusammenhang ist es aus der DE 33 03 109 A1 bekannt, daß mit Codierung versehene Waren vermessen und gewogen werden und entsprechend diesen Eingangsgrößen am Systemausgang eine neue Codierung aufgebracht wird. Hierbei besteht jedoch die nicht unbegründete Gefahr, daß eine derartige Codierung für den Fall einer berührungslosen Beschriftung unleserlich verschmiert ist bzw. daß für den Fall einer Aufbringung von Klebeschildern diese unter Umständen nicht einwandfrei am Gut haften und verloren gehen.

Ferner sei noch auf die Dokumente DE-A-39 32 374 und FR-A-2 565 370 verwiesen. Diese beiden Schriften beziehen sich konzeptionell auf Paketfördertechnik, wobei die erstere Schrift ein System angibt, bei dem Pakete Paketnummern aufweisen, die eingelesen werden. Daraufhin wird das Paketgewicht ermittelt, Zustände der Pakete werden von einem Beobachter erfaßt und danach wird ein sogenanntes Routerlabel, das den Transportweg des Paketes aufzeigt, an diesem angebracht.

Die zweitgenannte Schrift betrifft das allgemeine Prinzip, daß Transportobjekte einem Vorher-Nachher-Vergleich hinsichtlich physikalischer Größen unterzogen werden. Bei Abweichungen oberhalb eines vorgegebenen Schwellwertes, erfolgt dann ein Meldungsausdruck.

Aufgabe der Erfindung ist es, ein vollautomatisches Verfahren zur Datenerfassung von auf Förderbahnen transportierten Gegenständen zu schaffen.

Diese Aufgabe wird gelöst durch ein Verfahren zur Datenerfassung von auf Förderbahnen transportierten Gegenständen, insbesondere von Paketen, wobei
1.1 die Breite und Höhe eines jeden Gegenstandes durch optische Meßsysteme und dessen jeweilige Länge durch optische und/oder mechanische Meßsysteme erfaßt wird,
1.2 das Gewicht des jeweiligen Gegenstandes durch eine - mit einem Abschnitt der Förderbahn verbundene - Wiegevorrichtung erfaßt wird,
1.3 auf jeden Gegenstand durch eine Codiervorrichtung ein individueller unterschiedlicher Code aufgebracht wird und der aufgebrachte Code in einer der Codiervorrichtung unmittelbar nachgeordneten Code-Lesevorrichtunggelesen wird,
1.4 die erfaßten Daten eines jeden Gegenstands dem von einer Code-Lesevorrichtung gelesenen zugehörigen individuellen Code zugeordnet und in einer Datenverarbeitungsanlage gespeichert werden, so daß jeder Gegenstand hinsichtlich seiner Abmessungen und seines Gewichts eindeutig identifizierbar ist.

Mit diesem Verfahren lassen sich die Geometriedaten und das Gewicht eines Gegenstandes erfasse und diesem eindeutig zuordnen. Falls jedoch bezüglich des Gegenstandes noch weitere Informationen in die Datenverarbeitungsanlage eingegeben werden sollen, so kann dies nach einer vorteilhaften Ausführung der Erfindung dadurch geschehen, daß auf dem Gegenstand befindliche optisch und inhaltlich erfaßbare Zeichen durch ein bildgebendes System aufgenommen, über einen Monitor angezeigt und in die Datenverarbeitungsanlage eingegeben werden, wobei sie automatisch dem entsprechenden Code zugeordnet werden.

Nach einer weiteren Ausbildung der Erfindung können die aufgenommenen Bilder von mehreren Gegenständen unter Zuordnung des jeweiligen Codes auch zwischengespeichert und dann beliebig abgerufen werden. Diese Ausbildung ist besonders in Stoßzeiten vorteilhaft anwendbar.

Zur Vereinfachung der Geometriedatenerfassung und Aufbringen der Codenummern ist es vorteilhaft, wenn die Gegenstände vor der Identifizierung, d.h. bevor sie in den Identifizierungsbereich gelangen, in ihrer Lage ausgerichtet werden.

Aufgabe der Erfindung ist es aber auch, eine vollautomatische Vorrichtung zur Datenerfassung von auf Förderbahnen transportierten Gegenständen zu schaffen.

Diese Aufgabe wird gelöst durch eine Vorrichtung zur Datenerfassung von auf Förderbahnen transportierten Gegenständen, insbesondere von Paketen, mit
5.1 einem Endlosförderer, der einen Teilbereich der Förderbahn und gleichzeitig den Wiegetisch einer Wiegevorrichtung bildet,
5.2 rechtwinklig und senkrecht zur Ebene des Förderbandes angeordneten Lichtschranken-Arrays zur Erfassung von Breite und Höhe des jeweiligen Gegenstands,
5.3 einer mit dem Endlosförderer verbundenen Drehgeber-Meßvorrichtung zur Messung der Länge des jeweiligen Gegenstands,
5.4 einer höhenverstellbaren Codiervorrichtung zur Aufbringung eines zugehörigen individuellen Codes auf einen jeden Gegenstand sowie einer unmittelbar nachgeordneten Code-Lesevorrichtung,
5.5 einer Datenverarbeitungsanlage die mit den Lichtschranken-Arrays der Meßvorrichtung der Codiervorrichtung und mit der Code-Lesevorrichtung verbunden ist und
5.6 Speichermitteln in der Datenverarbeitungsanlage mittels derer die erfaßten Daten jedes Gegenstandes zusammen mit dem jeweiligen zugehörigen individuellen Code speicherbar und zuordbar sind.

Das Verfahren und die erfindungsgemäße Vorrichtung werden im folgenden anhand einer Zeichnung näher beschrieben. Dabei zeigen:
- FIG 1: die schematische Darstellung eines Datenerfassungsbereichs in Draufsicht,
- FIG 2: die schematische Darstellung eines Datenerfassungsbereichs in Seitenansicht.

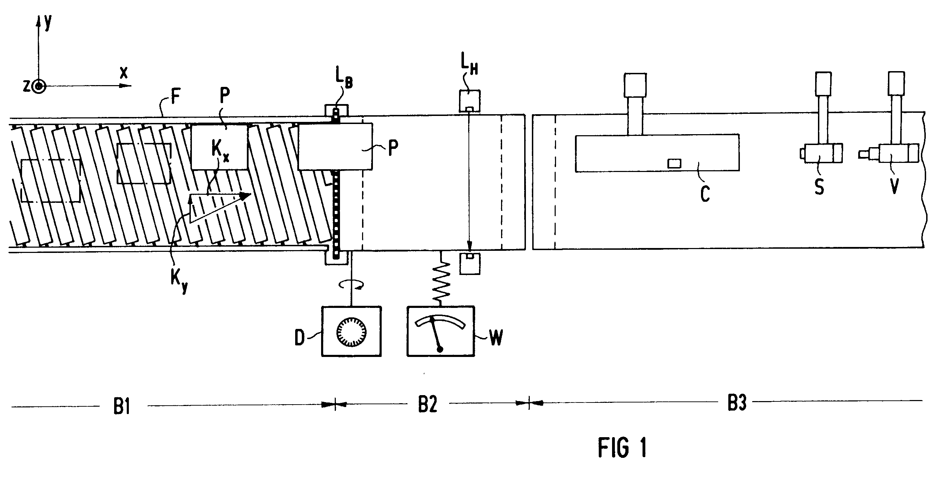

FIG 1 zeigt einen Teilausschnitt eines Endlosfördersystems, in dem eine Datenerfassung von auf dem Fördersystem transportierten Gegenständen, z.B. Paketen P, vorgenommen wird. Die Vorrichtung ist in drei Bereiche B1 bis B3 aufgeteilt, wobei in den Bereichen B2 und B3 die eigentliche Identifizierung der Pakete P erfolgt. Der Bereich B1 dient der Ausrichtung der Pakete P an einer Längsführung F, die gleichzeitig die seitliche Begrenzung des ersten Förderbereichs B1 darstellt. Der Förderbereich B1 ist als Rollenförderer ausgebildet, wobei die Rollen schräg angebracht sind, so daß auf die Pakete P - wie aus dem eingezeichneten Kräftedreieck ersichtlich ist - eine Kraftkomponente K_{y}, Kₓ in Y- und X-Richtung ausgeübt wird, so daß die Pakete nach einer bestimmten Strecke an die Längsführung F gebracht werden und entlang dieser bis zum Förderbereich B2 transportiert werden. Je nach Einsatzzweck kann dabei die Längsfuhrung F über Gleitmittel, wie Rollen oder eine Teflonbeschichtung etc. verfügen, damit keine zu große Reibung zwischen den Paketen P und der Längsführung F entsteht.

Die Pakete P werden aus dem Förderbereich B1 in den Förderbereich B2 transportiert, in dem eine Breiten-, Höhen- und Längenmessung der Pakete erfolgt und in dem sie gleichzeitig gewogen werden. Unterhalb der Lücke zwischen dem Bereich B1 und B2 ist ein Lichtschranken-Array L_{B} angeordnet, das aus einer Vielzahl von nebeneinander angeordneten Fotozellen besteht, die von einem darüberliegenden, hier der Einfachheit halber nicht dargestellten Gegenstück beleuchtet werden. Wenn das Paket P vom Förderbereich B1 in den Förderbereich B2 transportiert wird, ergibt die letzte in negativer Y-Richtung unterbrochene Fotozelle unmittelbar die Breite des Paketes.

Der Förderbereich B2 ist als Förderband ausgebildet, das mittels zweier Walzen transportiert wird. An die erste Walze ist dabei ein Drehgeber D angeschlossen, der genau dann gestartet wird, wenn die vordere Kante des Paketes P das Lichtschranken-Array L_{H} überfährt. Nach der Freigabe des Lichtschranken-Arrays L_{H} kann dann über den Drehgeber D unmittelbar die Länge des Paketes bestimmt werden. Wenn sich das Paket P vollständig auf dem Förderband im Bereich B2 befindet, wird es mittels einer an dem Förderband angeschlossenen Wiegevorrichtung W gewogen. Die Höhenvermessung wird analog zur Breitenvermessung über ein Lichtschranken-Array L_{H} vorgenommen.

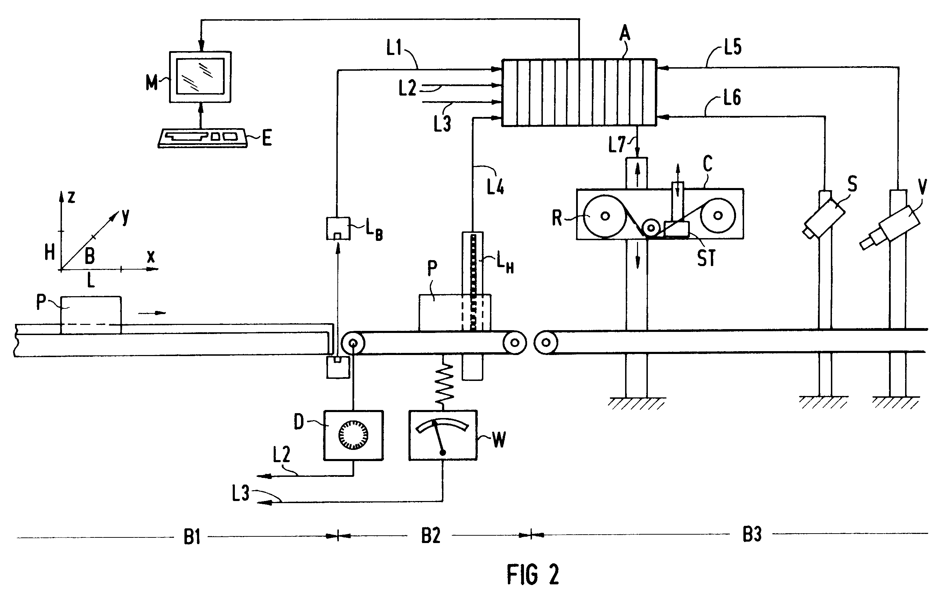

Nachdem die Geometriedaten vermessen und das Paket P gewogen wurde, gelangt das Paket vom Bereich B2 in den Bereich B3 in dem sich eine Codiervorrichtung C, ein Strichcodeleser S und eine Videokammera V befinden. Auf diese Vorrichtungen wird im folgenden anhand der FIG 2 näher eingegangen.

FIG 2 zeigt eine schematische Darstellung der aus FIG 1 bekannten Vorrichtung in Seitenansicht. Die bereits aus FIG 1 bekannte Lichtschranken-Anordnung L_{B} und L_{H} sowie der Drehgeber D und die Wiegevorrichtung W sind über die Leitungen L1...L4 an eine Datenverarbeitungsanlage A angeschlossen. Die Automatisierungsanlage A ist über die Leitung L7 mit der Höhenverstellung der Codiervorrichtung C verbunden. An der Codiervorrichtung C befindet sich eine Rolle R mit jeweils voneinander verschiedenen, selbstklebenden Strichcode-Etiketten. Diese Strichoder Barcodeetiketten werden so an einem Stempel ST vorbeigeführt, daß sie sich vor dem Stempel vom Trägerpapier lösen und an den Stempel ST, der über eine nicht dargestellte Unterdruckvorrichtung verfügt, angesogen werden.

Die Datenverarbeitungsanlage A steuert über die Leitung L7, die Höhenverstellung der Codiervorrichtung so, daß der Stempel ST in einem vorgebbaren Abstand über der zuvor gemessenen Höhe H des Paketes positioniert wird. Wenn das Paket P dann unter dem ebenfalls, jedoch nur geringfügig höhenverstellbaren Stempel ST vorbeiläuft, wird dieser an die Oberfläche des Paketes gedrückt und das an dem Stempel befindliche Etikett wird durch Umkehrung der Luftströmung auf das Paket P geklebt. Danach wird der auf dem Etikett befindliche Strichcode vom Strichcodeleser S während das Paket vorbeiläuft, gelesen und der gelesene Code der Datenverarbeitungsanlage A über die Leitung L6 mitgeteilt. In der Datenverarbeitungsanlage A wird dann der Strichcode automatisch den über die Leitungen L1...L4 eingegebenen Daten des Paketes zugeordnet. Damit ist das Paket P, hinsichtlich seiner Abmessungen und seines Gewichts eindeutig identifizierbar.

Die Identifizierung eines Paketes P oder eines anderen Gegenstandes kann aber noch weiter gehen. So sind beispielsweise auf einer Vielzahl von Paketen P oder Gegenständen Symbole und Beschriftungen angebracht, die nicht vollautomatisch erfaßbar sind. Beispielsweise kann sich auf der Stirnseite eines Paketes ein Glassymbol befinden, das auf besondere Zerbrechlichkeit des Inhalts hinweist, es kann die Lieferantennummer und/oder der Inhalt und die Stückzahl des Paketes P angegeben sein. Während die bisher beschriebene Datenerfassung lediglich Daten liefert, die eher für den Lagervorgang entscheidend sind, also beispielsweise ob das zulässige Gesamtgewicht eines Lagerbehälters bzw. eines Lagerfachs nicht überschritten wird, ob die Normmaße für die Lagerung eingehalten werden, so sind die Daten über den Inhalt, die Lieferantennummer etc., für die eigentliche Lagerhaltung von Bedeutung. Diese Daten werden mit der Videokammera V aufgenommen und über die Datenverarbeitungsanlage A auf einem Monitor M angezeigt. Mit einer Eingabevorrichtung E können die optisch erfaßen Daten in die Datenverarbeitungsanlage A eingegeben werden, wo sie ebenfalls automatisch dem entsprechenden Strichcode zugeordnet werden. Damit ist das Paket P über seinen Strichcode vollständig identifizierbar.

## Patentansprüche

1. Verfahren zur Datenerfassung von auf Förderbahnen transportierten Gegenständen, insbesondere von Paketen, wobei
1.1 die Breite (B) und Höhe (H) eines jeden Gegenstandes (P) durch optische Meßsysteme (L_{B},L_{H}) und dessen jeweilige Länge (L) durch optische und/oder mechanische Meßsysteme (M) erfaßt wird,
1.2 das Gewicht des jeweiligen Gegenstandes (P) durch eine - mit einem Abschnitt der Förderbahn verbundene - Wiegevorrichtung (W) erfaßt wird,
1.3 auf jeden Gegenstand (P) durch eine Codiervorrichtung (C) ein individueller unterschiedlicher Code aufgebracht wird und der aufgebrachte Code in einer der Codiervorrichtung (C) unmittelbar nachgeordneten Code-Lesevorrichtung(S) gelesen wird,
1.4 die erfaßten Daten (L,B,H,G) eines jeden Gegenstands (P) dem von einer Code-Lesevorrichtung (S) gelesenen zugehörigen individuellen Code zugeordnet und in einer Datenverarbeitungsanlage (A) gespeichert werden, so daß jeder Gegenstand (P) hinsichtlich seiner Abmessungen und seines Gewichts eindeutig identifizierbar ist.

2. Verfahren nach Anspruch 1, wobei auf dem Gegenstand (P) befindliche optisch und inhaltlich erfaßbare Zeichen durch ein bildgebendes System aufgenommen, über einen Monitor angezeigt und in die Datenverarbeitungsanlage (A) eingegeben werden, wobei sie automatisch dem entsprechenden Code zugeordnet werden.

3. Verfahren nach Anspruch 2, wobei die aufgenommenen Bilder von mehreren Gegenständen (P) unter Zuordnung des jeweiligen Codes zwischengespeichert werden und beliebig abrufbar sind.

4. Verfahren nach einem der vorstehenden Ansprüche, wobei Mittel zur Ausrichtung der Gegenstände (P) vor Beginn der Datenerfassung vorgesehen sind.

5. Vorrichtung zur Datenerfassung von auf Förderbahnen transportierten Gegenständen (P), insbesondere von Paketen, mit
5.1 einem Endlosförderer (E), der einen Teilbereich (B2) der Förderbahn und gleichzeitig den Wiegetisch einer Wiegevorrichtung (W) bildet,
5.2 rechtwinklig und senkrecht zur Ebene des Förderbandes angeordneten Lichtschranken-Arrays (L_{B},L_{H}) zur Erfassung von Breite und Höhe des jeweiligen Gegenstands (P),
5.3 einer mit dem Endlosförderer (E) verbundenen Drehgeber-Meßvorrichtung (M) zur Messung der Länge (L) des jeweiligen Gegenstands (P),
5.4 einer höhenverstellbaren Codiervorrichtung (C) zur Aufbringung eines zugehörigen individuellen Codes auf einen jeden Gegenstand (P) sowie einer unmittelbar nachgeordneten Code-Lesevorrichtung (S),
5.5 einer Datenverarbeitungsanlage (A) die mit den Lichtschranken-Arrays (L_{B},L_{H}) der Meßvorrichtung (M) der Codiervorrichtung (C) und mit der Code-Lesevorrichtung (S) verbunden ist und
5.6 Speichermitteln in der Datenverarbeitungsanlage (A) mittels derer die erfaßten Daten (L,B,H,G) jedes Gegenstandes (P) zusammen mit dem jeweiligen zugehörigen individuellen Code speicherbar und zuordbar sind.

## Claims

1. Method for data acquisition from objects transported on conveyor belts, in particular from packages, wherein
1.1 the width (B) and height (H) of each object (P) is measured by optical measuring systems (L_{B},L_{H}) and its respective length (L) by optical and/or mechanical measuring systems (M),
1.2 the weight of the respective object (P) is measured by a weighing device (W) connected to a section of the conveyor belt,
1.3 an individual variable code is applied to each object (P) by a coding device (C) and the applied code is read in a code reading device (S) directly downstream of the coding device (C),
1.4 the acquired data (L,B,H,G) of each object (P) is allocated to the associated individual code read by a code reading device (S) and is stored in data processing equipment (A) so that each object (P) is clearly identifiable with respect to its dimensions and its weight.

2. Method according to claim 1, wherein symbols which are located on the object (P) and which can be detected optically and in terms of content are recorded by an image-transmitting system, displayed by way of a monitor and entered into the data processing equipment (A), wherein they are automatically allocated to the corresponding code.

3. Method according to claim 2, wherein the recorded images of several objects (P) are intermediately stored with the allocation of the respective code and can be arbitrarily retrieved.

4. Method according to one of the above claims, wherein means are provided for the alignment of the objects (P) before the beginning of the data acquisition.

5. Device for data acquisition from objects (P) transported on conveyor belts, in particular from packages, having
5.1 an endless conveyor (E) which forms a partial area (B2) of the conveyor belt and at the same time the weighing table of a weighing device (W),
5.2 light barrier arrays (L_{B},L_{H}) arranged at right angles to and perpendicular to the plane of the conveyor belt for measuring the width and height of the respective object (P),
5.3 a rotary transducer measuring device (M) connected to the endless conveyor (E) for measuring the length (L) of the respective object (P),
5.4 a height-adjustable coding device (C) for applying an associated individual code to each object (P), and a code reading device (S) directly downstream thereof,
5.5 data processing equipment (A) which is connected to the light barrier arrays (L_{B},L_{H}) of the measuring device (M) of the coding device (C) and to the code reading device (S) and
5.6 memory means in the data processing equipment (A), by means of which the acquired data (L,B,H,G) of each object (P) can be stored and allocated together with the respective associated individual code.

## Revendications

1. Procédé d'acquisition de données d'objets transportés sur des voies de transport, notamment de paquets, dans lequel:
1.1 on relève la largeur (B) et la hauteur (H) de chaque objet (P) par des systèmes (L_{B},L_{H}) optiques de mesure et on relève leur longueur (L) par des systèmes (M) optiques et/ou mécaniques de mesure,
1.2 on relève le poids de l'objet (P) par un dispositif (W) de pesée relié à un tronçon de la voie de transport,
1.3 on appose sur chaque objet (P) par un dispositif (C) de codage un code individuel différent et on lit le code apposé dans un dispositif (S) de lecture de code monté juste en aval du dispositif (C) de codage,
1.4 on associe les données (L,B,H,G) relevées de chaque objet (P) au code individuel correspond lu par un dispositif (S) de lecture de code et on les mémorise dans une installation (A) de traitement des données de sorte que l'on peut identifier de manière univoque chaque objet (P) pour ce qui concerne ses dimensions et son poids

2. Procédé suivant la revendication 1, dans lequel on enregistre, par un système de formation d'image, les signes se trouvant sur l'objet et pouvant être relevés par leur aspect ou par leur contenu, on les affiche sur un moniteur et on les charge dans l'installation (A) de traitement de données, où ils sont associés automatiquement au code correspondant.

3. Procédé suivant la revendication 2, dans lequel les images enregistrées de plusieurs objets (P) sont stockées intermédiairement avec association de leur code et peuvent être appelées à volonté.

4. Procédé suivant l'une des revendications précédentes dans lequel il est prévu des moyens d'orientation des objets (P), avant le début de l'acquisition des données.

5. Dispositif d'acquisition de données d'objets (P) transportés sur des voies de transport, notamment de paquets comprenant :
5.1 un convoyeur (E) sans fin, qui forme une partie (B2) de la voie de transport et en même temps la table de pesée d'un dispositif (W) de pesée
5.2 un réseau (L_{B};L_{H}) de cellules photoélectriques disposées à angle droit et perpendiculairement au plan de la bande convoyeuse et destiné à détecter la largeur et la hauteur de l'objet (P).
5.3 un dispositif (M) de mesure encodeur, relié au convoyeur (E) sans fin et destiné à mesurer la longueur de l'objet (P)
5.4 un dispositif (c) de codage, réglable en hauteur, destiné à apposer un code individuel correspondant sur chaque objet (P), ainsi qu'un dispositif (S) de lecture de code monté juste en aval,
5.5 une installation (A) de traitement de données, qui est reliée au réseau (L_{B},L_{H}) de cellules photoélectriques, au dispositif (M) de mesure, au dispositif (C) de codage et au dispositif (S) de lecture de code et
5.6 des moyens de mémorisation dans l'installation (A) de traitement de données, au moyen desquels on peut mémoriser et associer les données (L,B,H,G) relevées de chaque objet (P) ensemble avec le code individuel associé.
